# EUROPÄISCHE PATENTANMELDUNG

(11) **EP 0 567 918 A2**
(43) Veröffentlichungstag der Anmeldung: **03.11.1993**
(21) Anmeldenummer: 93106472.9
(22) Anmeldetag: 21.04.1993
(51) Int. Cl.: C09B 67/20, C09B 67/18, C09D 11/02, C09B 41/00

(54) **Azopigmentpräparation**

(30) Priorität: 25.04.1992 DE 4213705
(71) Anmelder: HOECHST AKTIENGESELLSCHAFT, D-65926 Frankfurt am Main (DE)
(72) Erfinder: Schenk, Karl Heinz, Dr., W-6270 Idstein/Ts (DE); Heinrichs, Angelika, Dr., W-6104 Seeheim (DE); Metz, Hans Joachim, Dr., W-6100 Darmstadt (DE)

(57) **Zusammenfassung**

Azopigmentpräparationen, bestehend im wesentlichen aus
a) einem Amid oder einer Mischung von Amiden, erhältlich aus der Umsetzung
   a1) einer Aminocarbonsäure oder a2) eines Lactams jeweils in Gegenwart eines langkettigen primären oder sekundären aliphatischen Amins oder a3) einer Dicarbonsäure, eines Diamins und eines langkettigen primären oder sekundären aliphatischen Amins miteinander,
b) mindestens einem Diamin,
c) mindestens einem langkettigen primären oder sekundären aliphatischen Amin,
d) mindestens einem Azopigment sowie
e) gegebenenfalls weiteren üblichen Zusatzstoffen
ergeben beim Einarbeiten in Illustrationstiefdruckfarben glänzende, farbstarke Drucke, die auch durch dünne Papiere nicht durchschlagen.

## Beschreibung

Die vorliegende Erfindung liegt auf dem technischen Gebiet der Azopigmentpräparationen und deren Verwendung in Druckfarben.

In der DE-AS 14 69 782 ist offenbart, daß man leicht dispergierbare Pigmente erhält, wenn man bei der Kupplung langkettige Amine vom Typ des Talgfettpropylendiamins zusetzt. Diese Pigmentpräparationen haben allerdings den Nachteil, daß damit hergestellte Tiefdruckfarben durch dünne Papiere durchschlagen.

In den EP-A1-0057 880 und EP-A1-0062 304 ist beschrieben, daß man farbstarke, gut fließfähige und gut dispergierbare Azopigmentpräparationen erhält, wenn man ein langkettiges aliphatisches primäres Amin und ein aliphatisches Diamin vor während oder nach der Kupplung zusetzt. Die auf diese Weise hergestellten Pigmentpräparationen liefern Druckfarben, die beim Druck auf dünnem Papier nicht durchschlagende Drucke liefern. Eine weitere Steigerung der Farbstärke und des Ganzes ist jedoch aufgrund der gestiegenen Anforderungen im Illustrationstiefdruck anzustreben.

In der Internationalen Patentanmeldung WO 91/09063 sind niedermolekulare Copolymere aus einem α-Olefin und einer ungesättigten Carbonsäure, worin alle Carboxylgruppen mit mindestens einer Aminosäure zum Amid umgesetzt sind, beschrieben. Diese Copolymeramide werden zum Flushen von Pigmenten verwendet.

In der EP-A2-0189 385 werden Dispergiermittel, bestehend aus Polyesteramiden, Salzen von Carbonsäuren und Diaminen sowie freien Carbonsäuren oder freien Diaminen, beschrieben, die Feststoffe, insbesondere Pigmente, in organischen Lösungsmitteln dispergieren.

Der vorliegenden Erfindung lag daher die Aufgabe zugrunde, Azopigmentpräparationen zur Verfügung zu stellen, die den bislang bekannten Azopigmentpräparationen hinsichtlich des Glanzes und der Farbstärke überlegen sind und die auf dünnem Papier nicht durchschlagende Drucke liefern.

Es wurde gefunden, daß Azopigmentpräparationen, die mindestens ein Amid, erhältlich aus der Umsetzung einer Aminocarbonsäure oder eines Lactams in Gegenwart eines langkettigen primären oder sekundären aliphatischen Amins oder erhältlich aus der Umsetzung einer Dicarbonsäure, eines Diamins und eines langkettigen primären oder sekundären aliphatischen Amins miteinander, und mindestens ein Diamin sowie mindestens ein langkettiges primäres oder sekundäres aliphatisches Amin enthalten, die erfindungsgemäße Aufgabe lösen.

Gegenstand der vorliegenden Erfindung sind Azopigmentpräparationen, bestehend im wesentlichen aus den Komponenten a) bis d) und gegebenenfalls e) weiteren üblichen Zusatzstoffen,
a) einem Amid oder einer Mischung von Amiden, erhältlich aus der Umsetzung
a1) einer Aminocarbonsäure der Formel H₂N-(CR¹ R²)ₘ₄ -COOH oder
a2) eines Lactams der Formel 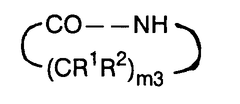 oder
a3) einer Dicarbonsäure der Formel HOOC-(CR¹ R²)ₘ₁ -COOH oder einer olefinischen Dicarbonsäure der Formel HOOC-CR¹ = CR²-COOH oder eines der genannten Dicarbonsäure zugrundeliegenden Anhydrids und eines Diamins der Formel H₂N-(CR¹ R²)ₘ₂ -NH₂,
   in Gegenwart mindestens eines langkettigen primären oder sekundären aliphatischen Amins der Formel (III)

   R³R⁴R⁵N (III),

   worin
   - R¹ und R²: jeweils unabhängig voneinander Wasserstoff oder C₁-C₄-Alkyl, vorzugsweise jedoch Wasserstoff,
   - m3: eine ganze Zahl von 3 bis 12, vorzugsweise von 5 bis 12,
   - m4: eine ganze Zahl von 1 bis 15, vorzugsweise von 3 bis 12,
   - R³: Wasserstoff, C₄-C₂₅-Alkyl oder C₄-C₂₅-Alkenyl, vorzugsweise Wasserstoff, C₁₀-C₂₅-Alkenyl oder C₁₀-C₂₅-Alkyl,
   - R⁴: Wasserstoff, C₄-C₂₅-Alkyl, C₄-C₂₅-Alkenyl oder -[-(CR¹ R²)ₘ₅ -NR³]ₚR³⁰, vorzugsweise Wasserstoff, C₁₀-C₂₅-Alkyl, C₁₀-C₂₅-Alkenyl oder -[-(CH₂)ₘ₅ -NR³]ₚ-R³⁰ bedeuten,
   - R⁵: Wasserstoff oder -[-(CR¹ R²)ₘ₅-NR³]ₚ-R³⁰, worin R¹ und R² vorzugsweise Wasserstoff sind,
   - R³⁰: unabhängig von R³ die vorstehend für R³ angegebene Bedeutung hat,
   - p: eine ganze Zahl von 1 bis 8, vorzugsweise 1 bis 4,
   - m1: eine ganze Zahl von 1 bis 10, vorzugsweise 1 bis 8,
   - m2: eine ganze Zahl von 2 bis 14, vorzugsweise 2 bis 10, und
   - m5: eine ganze Zahl von 2 bis 14, vorzugsweise 2 bis 10, bedeuten, mit der Maßgabe, daß R³, R⁴ und R⁵ nicht gleichzeitig Wasserstoff sind,
b) mindestens einem Diamin der Formel (II)

   H₂N-A-NH₂ (II),

   worin A für einen zweiwertigen aliphatischen Kohlenwasserstoffrest mit 6 bis 30, vorzugsweise 6 bis 24, Kohlenstoffatomen steht;
c) mindestens einem langkettigen primären oder sekundären aliphatischen Amin der vorstehend genannten Formel (III) oder einem Salz dieses Amins sowie
d) mindestens einem Azopigment.

Unter Alkenyl-Resten sind auch solche zu verstehen, die bis zu drei olefinische Doppelbindungen enthalten.

Die gemäß der Umsetzung nach a1) oder a2) erhältlichen Amide sind vorzugsweise solche der Formel (Ia)

Z¹-[-CO-(CR¹R²)ₘ -NH-]_{z} -H (Ia),

wobei
- z¹: Hydroxyl oder -NR³R⁴ und
- z: eine ganze Zahl von 1 bis 20, vorzugsweise 2 bis 10, insbesondere 2 bis 6, bedeuten,
- m: im Falle der Umsetzung a1) die Bedeutung von m4 und im Falle der Umsetzung a2) die Bedeutung von m3 hat und
- R⁴: Wasserstoff, C₄-C₂₅-Alkyl oder C₄-C₂₅-Alkenyl, vorzugsweise Wasserstoff, C₁₀-C₂₅-Alkyl oder C₁₀-C₂₅-Alkenyl, bedeutet und
- R¹, R², R³, m3 und m4: die vorstehend genannten Bedeutungen haben;
sowie solche der Formel (Ib)

Z²-[-NR³-(CR¹R²)ₘ₅-]ₚ -NR³-[-CO-(CR¹R²)ₘ -NH-]_{z} -H (Ib)

worin
- z²: Wasserstoff, C₄-C₂₅-Alkyl, C₄-C₂₅-Alkenyl oder H₂N-(CR¹ R²)ₘ -CO- bedeutet und
- R¹, R², R³, m, m5, p und z: die vorstehend genannten Bedeutungen haben.

Die Aminocarbonsäure oder das Lactam werden mit dem Amin der Formel (III) im molaren Verhältnis 1:2 bis 10:1, vorzugsweise 1:1 bis 2:1, zur Einwirkung gebracht. Im Falle eines molaren Verhältnisses von etwa 1:1 entsteht beispielsweise ein Gemisch aus zusammen etwa 80 Gew.-% an dimeren (z=2) und trimeren (z=3) Kondensationsprodukten, während tetramere (z=4) und pentamere (z=5) Kondensationsprodukte zusammen etwa 20 Gew.-% ausmachen. Hexamere (z=6) und höhere Polymere entstehen dabei in sehr geringen Mengen. Ferner können Homopolymerisate des eingesetzten Lactams oder der Aminocarbonsäure entstehen, die nicht mit einem Amin der Formel (III) reagiert haben, jedoch gleichfalls den erfindungsgemäßen Zweck erfüllen und ebenfalls Gegenstand der vorliegenden Erfindung sind.

Die gemäß der Umsetzung a3) erhältlichen Amide sind vorzugsweise solche der Formel (Ic)

Z³-[-CO-(CR¹ R²)ₘ₁ -CO-NH-(CR¹ R²)ₘ₂ -NH-]_{y} -Z⁴ (Ic),

worin unabhängig voneinander R¹, R², m1 und m2 die vorstehend definierten Bedeutungen haben,
- Z³: für Hydroxyl oder -NR³R⁴,
- Z⁴: für Wasserstoff, -CO-(CR¹ R²)ₘ₁ -COOH oder -CO-(CR¹ R²)ₘ₁ -CONR³R⁴,
- R³ und R⁴: für Wasserstoff, C₄-C₂₅-Alkyl oder C₄-C₂₅-Alkenyl, und
- y: für eine ganze Zahl von Null bis 10, vorzugsweise 1 bis 6,
stehen, wobei im Falle, daß y Null ist, Z³ die Bedeutung -NR³R⁴ und Z⁴ die vorstehend genannten Bedeutungen außer Wasserstoff haben;
oder der Formel (Id)

Z⁵-[-NR³-(CR¹R²)ₘ₅ -]ₚ -NR³-[-CO-(CR¹R²)ₘ₁ -CO-NH-(CR¹R²)ₘ₂ -NH-]y-Z⁵⁰ (Id)

worin R¹, R², R³, p, y, m1, m2 und m5 die vorstehend definierten Bedeutungen haben,
Z⁵ und Z⁵⁰ unabhängig voneinander jeweils für Wasserstoff oder -CO-(CR¹R²)ₘ₁-COOH stehen, wobei im Falle, daß y Null ist, Z⁵⁰ für -CO-(CR¹R²)ₘ₁-COOH oder -CO-(CR¹R²)ₘ₁ -CONR³R⁴ steht,
oder der Formel (Ie)

Z⁶-{-CO-(CR¹R²)ₘ₁-CONH-(CR¹R²)ₘ₂-NH-}ₓ - {CO-(CR¹R²)ₘ₁-CONR³- [CR¹R²)ₘ₅-NR³]ₚ} _{y}-Z⁵ (Ie)

worin
- Z⁶: Hydroxyl oder H₂N-(CR¹R²)ₘ₂-NH- oder HR³N-[(CR¹R²)ₘ₅ -NR³]ₚ- und
- x: eine ganze Zahl von Null bis 10, vorzugsweise Null bis 6, bedeuten.

Die Dicarbonsäure, das Diamin der Formel H₂N-(CR¹ R²)ₘ₂-NH₂ und das Amin der Formel (III) werden zweckmäßigerweise in einem molaren Verhältnis von 1:1:1 bis 1:1,3:6, vorzugsweise von etwa 1:1:4, miteinander zur Einwirkung gebracht. Das molare Verhältnis von etwa 1:1 zwischen der Dicarbonsäure und dem genannten Diamin stellt eine bevorzugte Ausführungsform dar, ist jedoch zur Lösung der erfindungsgemäßen Aufgabe nicht zwingend notwendig. Es entstehen überwiegend Gemische aus Kondensationsprodukten, die aus jeweils 1 bis 10 Struktureinheiten der Dicarbonsäure, des Diamins der Formel H₂N-(CR¹ R²)ₘ₂-NH₂ und des Amins der Formel (III) zusammengesetzt sind. In den vorstehend genannten Kondensationsprodukten sind die der Dicarbonsäure, des Diamins und des Amins der Formel (III) zugrundeliegenden Struktureinheiten entsprechend den eingesetzten molaren Mengen dieser Ausgangsverbindungen ebenfalls im Verhältnis von 1:1:1 bis 1:1,3:6, vorzugsweise von etwa 1:1:4, enthalten. Darüberhinaus können Copolymerisate der eingesetzten Dicarbonsäure und des eingesetzten Diamins entstehen, die nicht mit einem Amin der Formel (III) reagiert haben, jedoch gleichfalls den erfindungsgemäßen Zweck erfüllen und ebenfalls Gegenstand der vorliegenden Erfindung sind. Im Falle, daß das Amin der Formel (III) ein Di-, Tri- oder Polyamin ist, können weiterhin auch Copolymerisate der eingesetzten Dicarbonsäure und des Amins der Formel (III) entstehen, die nicht mit einem Diamin der Formel H₂N-(CR¹ R²)ₘ₂-NH₂ reagiert haben, jedoch gleichfalls den erfindungsgemäßen Zweck erfüllen und ebenfalls Gegenstand der vorliegenden Erfindung sind.
a1) Die Umsetzung erfolgt bei einer Temperatur zwischen 170 und 250°C innerhalb von 5 bis 15 Stunden unter Säurekatalyse. Als Säuren können in diesem Zusammenhang organische oder anorganische Säuren verwendet werden, beispielsweise Salzsäure, Schwefelsäure, Phosphorsäure, Toluolsulfonsäure, Ameisensäure, Essigsäure oder Gemische dieser Säuren. Die eingesetzten molaren Mengenverhältnisse Aminocarbonsäure: Amin der Formel (III) liegen zwischen 1:2 und 10:1, vorzugsweise zwischen 1:1 und 2:1. Auf den Einsatz von Lösungsmitteln kann verzichtet werden. Eine Aufarbeitung, beispielsweise ein Reinigungsschritt oder eine Trennoperation, ist nicht erforderlich.
   Als Aminocarbonsäuren sind erfindungsgemäß beispielsweise geeignet: Glycin, β-Alanin, 4-Aminobutansäure, 5-Aminopentansäure, 6-Aminohexansäure, 7-Aminoheptansäure, 8-Aminooctansäure, 9-Aminononansäure, 10-Aminodecansäure, 11-Aminoundecansäure, 12-Aminododecansäure, C₃-C₁₅-Aminocarbonsäuren mit einem verzweigten C₃-C₁₄-Alkylrest sowie C₃-C₁₅-Aminocarbonsäuren, deren NH₂-Gruppe an ein tertiäres Kohlenstoffatom gebunden ist. Bevorzugte Aminocarbonsäuren im Sinne der vorliegenden Erfindung sind Aminocapronsäure (6-Aminohexansäure), 11-Aminoundecansäure und 8-Aminooctansäure.
a2) Die Umsetzung erfolgt zweckmäßigerweise in gleicher Weise wie unter a1) beschrieben. Die eingesetzten molaren Mengenverhältnisse Lactam: Amin der Formel (III) liegen zwischen 1:2 und 10:1, vorzugsweise zwischen 1:1 und 2:1.
   Als Lactame sind erfindungsgemäß beispielsweise geeignet: Caprolactam, Capryllactam, Önanthlactam und Laurinlactam, vorzugsweise Caprolactam und Laurinlactam.
a3) Die Umsetzung erfolgt zweckmäßigerweise in der gleichen Weise, wie vorstehend unter a1) und a2) beschrieben. Die eingesetzten molaren Mengenverhältnisse Dicarbonsäure, Diamin und Amin der Formel (III) liegen bei 1:1:1 bis 1:1,3:6, vorzugsweise bei 1:1:4. Anstelle der Dicarbonsäure kann auch das Anhydrid der entsprechenden Dicarbonsäure eingesetzt werden.
   Als Dicarbonsäuren sind erfindungsgemäß beispielsweise geeignet: Malonsäure, Bernsteinsäure, Glutarsäure, Adipinsäure, Pimelinsäure, Korksäure, Sebacinsäure, Maleinsäure und Fumarsäure, insbesondere Adipinsäure und Sebacinsäure.
   Als Diamine der Formel H₂N-(CR¹ R²)ₘ₂-NH₂ sind erfindungsgemäß beispielsweise geeignet: Ethylendiamin, Tri-, Tetra-, Penta-, Hexa-, Hepta-, Octa-, Nona- und Decamethylendiamin, insbesondere Ethylendiamin, Propylendiamin und Hexamethylendiamin.
   Als Amine der Formel (III) sind erfindungsgemäß langkettige primäre oder sekundäre aliphatische Amine geeignet, beispielsweise primäre Alkylamine wie Talgfettamin, Cocosfettamin, Oleylamin oder Stearylamin, sowie sekundäre Alkylamine wie Distearylamin, Dicocosfettamin oder Dioleylamin, Alkylalkylendiamine wie N,N'-Difettalkylethylen-diamin, Talgfettpropylendiamin oder Triamine wie N,N-Bis(3-aminopropyl)-talgfettamin, sowie Gemische der genannten Amine.
   Die Amine der Formel (III) können auch in Form ihrer Salze, beispielsweise Hydrochloride oder Acetate, eingesetzt werden.
   Umsetzungsprodukte des Typs Caprolactam mit Talgfettpropylendiamin sind in den DE-A-22 20 016 und DE-A-22 20 026 beschrieben und werden als antimikrobielle Mittel verwendet.
   Die gemäß Umsetzung a1), a2) oder a3) erhältlichen Produkte können direkt oder als wäßrige, wäßrig-salzsaure oder wäßrig-essigsaure Emulsion zu dem erfindungsgemäßen Zweck eingesetzt werden.
b) Als Diamine der Formel (II) kommen insbesondere Verbindungen in Betracht, deren Rest A eine Anzahl von 6 bis 24 Kohlenstoffatomen aufweist. A kann geradkettig oder verzweigt sein und cycloaliphatische Ringe enthalten. Bevorzugte Reste A sind:

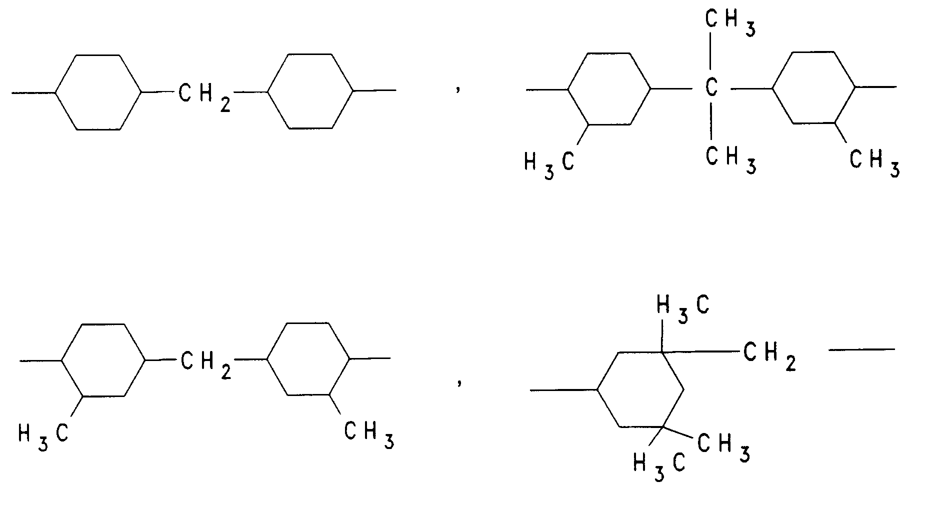

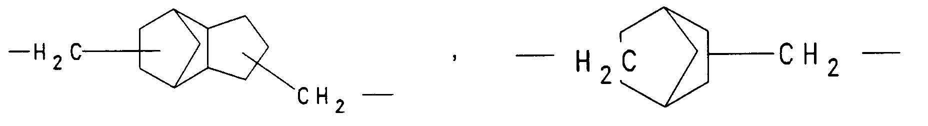

   - (CH₂)₆- - CH₂-C(CH₃)₂-CH₂-CH(CH₃)-CH₂-CH₂-.

   Die Verwendung von cycloaliphatischen Aminen als Zusatz bei der Herstellung von Azopigmenten ist bereits aus der DE-A-31 04 257 bekannt. Die so erhaltenen Produkte zeigen jedoch deutlich geringere Farbstärke und Glanz.
d) Als Azopigmente kommen alle in Illustrationstiefdruckfarben verwendeten Azopigmente in Betracht, vorzugsweise solche der Acetoacetylarylamid-Reihe, insbesondere C.I. Pigment Yellow 12(C.I. No. 21090), 13(C.I. No. 21100), 14(C.I. No. 21095), 16(C.I. No. 20040), 17(C.I. No. 21105), 83, 106, 114, 126 und 127.
   Gegenstand der vorliegenden Erfindung ist ferner ein Verfahren zur Herstellung von Azopigmentpräparationen, das dadurch gekennzeichnet ist, daß die gemäß der Umsetzung nach a1), a2) oder a3) erhältlichen Amide, mindestens ein Diamin der Formel (II) und mindestens ein Amin der Formel (III) vor, während oder nach der Azokupplung, vorzugsweise vor der Azokupplung, zugesetzt werden. Das Amin der Formel (III) braucht jedoch nicht in einem separaten Schritt zugegeben werden, wenn bei der Umsetzung nach a1), a2) oder a3) das Amin der Formel (III) in einem solchen Überschuß eingesetzt wird, daß dadurch der Anteil dieses Amins für den erfindungsgemäßen Zweck bereits ausreicht.
   Der Anteil des oder der Amide gemäß Umsetzung a) in der erfindungsgemäßen Azopigmentpräparation liegt zwischen 5 und 50 Gew.-%, vorzugsweise zwischen 35 und 45 Gew.-%, bezogen auf das Gewicht des Azopigments. Der Anteil des oder der Diamine der Formel (II) in der erfindungsgemäßen Azopigmentpräparation liegt zwischen 2 und 20 Gew.-%, vorzugsweise 4 und 12 Gew.-%, und der Anteil des oder der Amine der Formel (III) zwischen 5 und 40 Gew.-%, vorzugsweise 10 und 30 Gew.-%, jeweils bezogen auf das Gewicht des Azopigments.
   Durch Variation der Anteile der Amide sowie der Diamine der Formel (II) kann das Durchschlageverhalten und die Nuancierung je nach angestrebten Eigenschaften verändert werden. Die günstigsten Relationen sind durch einfache Vorversuche leicht zu ermitteln.
e) Es ist weiterhin vorteilhaft, der Kupplung einen Emulgator zuzusetzen. Hierfür kommen üblicherweise eingesetzte Emulgatoren, wie langkettige Aminoxide und Phosphinoxide, insbesondere Salze von langkettigen Aminen, zum Einsatz. Die Salze langkettiger Amine können durch alkalische Behandlung der Pigmente in die Amine überführt werden und so ebenfalls als Präpariermittel dienen. Solche Emulgatoren sind aus den DE-A 11 73 601 und 15 44 494 bekannt.

Es kann weiterhin von Vorteil sein, anstelle des Emulgators oder zusätzlich eine kationische Verbindung vom Typ der Phasentransferkatalysatoren zuzusetzen. Geeignet sind unter anderem Stearyltrimethylammoniumchlorid oder Dodecylbenzyldimethylammoniumchlorid.

Die Emulgatoren und kationischen Verbindungen werden in praxisüblichen Mengen eingesetzt, beispielsweise bis zu etwa 15 Gew.-% an Emulgator, bezogen auf das Gewicht an Kupplungskomponente, und bis zu 8 Gew.-% an kationischer Verbindung, bezogen auf das Gewicht an Pigment.

Die erfindungsgemäßen Azopigmentpräparationen sind sehr farbstark und ergeben beim Einarbeiten in Illustrationstiefdruckfarben glänzende, farbstarke Drucke, die auch durch dünne Papiere nicht durchschlagen. Gegenstand der vorliegenden Erfindung ist daher auch die Verwendung der erfindungsgemäßen Azopigmentpräparationen zur Herstellung von Illustrationstiefdruckfarben.

In den folgenden Beispielen beziehen sich die Prozentangaben auf das Gewicht.

### Herstellungsbeispiele

### 1) Amide aus Talgfettpropylendiamin und ε-Caprolactam im Verhältnis 1:1

a) 2720 g (8 Mol) Talgfettpropylendiamin und 905 g (8 Mol) ε-Caprolactam werden bei 70°C aufgeschmolzen und mit 46 g 31%iger Salzsäure versetzt. Unter Stickstoffatmosphäre wird die Schmelze 5 bis 15 Stunden auf 180 bis 250°C erhitzt und dabei ein wäßriges Destillat abgezogen. Das Reaktionsprodukt stellt eine helle Schmelze dar, die sich bei Temperaturen unter 100°C verfestigt.
b) 113 g (1 Mol) ε-Caprolactam und 340 g (1 Mol) Talgfettpropylendiamin werden mit 10 g 31%iger Salzsäure und 1060 ml Wasser gemischt und 5 bis 10 Stunden unter Rückfluß erhitzt. Man erhält eine cremige, 30%ige wäßrige Emulsion, die direkt der Azokupplung zudosiert werden kann.
c) 113 g (1 Mol) ε-Caprolactam und 340 g (1 Mol) Talgfettpropylendiamin werden mit 10 g HCl gemischt und wie in Herstellungsbeispiel 1 a) umgesetzt. Die heiße Schmelze wird in 1000 ml Wasser und 60 ml Essigsäure (100 %) eingerührt. Man erhält eine leicht fließende 30 %ige wäßrig-essigsaure Emulsion, die direkt der Azokupplung zudosiert werden kann.

### 2) Amide aus ε-Caprolactam und Talgfettpropylendiamin im Verhältnis 1,5:1

2040 g (6 Mol) Talgfettpropylendiamin werden bei 120°C aufgeschmolzen, mit 1017 g (9 Mol) ε-Caprolactam und mit 30 ml 31%iger Salzsäure versetzt und 5 bis 15 Stunden bei 180 bis 250°C erhitzt. Das Produkt wird ohne Aufarbeitung isoliert.

### 3) Amide aus N,N-Bis(3-aminopropyl)-talgfettamin und ε-Caprolactam

191 g (0,5 Mol) N,N-Bis(3-aminopropyl)-talgfettamin und 57 g (0,5 Mol) ε-Caprolactam werden mit 10 ml 31%iger Salzsäure gemischt und 5 bis 15 Stunden auf 180 bis 250°C erhitzt. Das Produkt wird ohne Aufarbeitung isoliert und verfestigt sich unterhalb von 100°C zu einer pastenartigen Masse.

### 4) ε-Caprolactam-Oligomere

3000 g (26,5 Mol) ε-Caprolactam werden mit 180 ml 31%iger Salzsäure versetzt und 1 bis 3 Stunden auf 180 bis 250°C erhitzt. Nach der Abdestillation des nicht umgesetzten Monomeren wird das weiße feste Produkt gemahlen.

### 5) Amide aus Adipinsäure, Hexamethylendiamin und Talgfettpropylendiamin

680 g (2 Mol) Talgfettpropylendiamin, 73 g (0,5 Mol) Adipinsäure und 58 g (0,5 Mol) Hexamethylendiamin werden 5 bis 15 Stunden bei 180 bis 250°C erhitzt. Man erhält eine helle Schmelze, die unterhalb von 100°C pastös wird.

### Anwendungsbeispiele

1a) 1040 g 3,3'-Dichlor-4,4'-diaminobiphenyl werden mit 2700 ml 31 %iger Salzsäure angerührt und mit 1150 ml 38 %iger Natriumnitritlösung bei einer Temperatur von
   0 bis 15°C bisdiazotiert.
   In 4l Wasser werden 160 g Oleylamin-Acetat und 240 g Essigsäure (100 %ig) vorgelegt und eine Emulsion aus 1600 g Amid nach Herstellungsbeispiel 1 in 4l Wasser zugegeben. In diese Mischung werden 1460 g Acetoacetylaminobenzol portionsweise zugegeben und der pH-Wert auf 5,5 eingestellt.
   Die Kupplung erfolgt durch langsames Zulaufen der Bisdiazoniumsalzlösung zur Suspension der Kupplungskomponente, wobei der pH-Wert durch geregelten, gleichzeitigen Zulauf von Natronlauge bei etwa 4,5 gehalten wird.
   Nach Beendigung der Kupplung wird die Suspension auf etwa 70°C erwärmt und 180 g Bis-4-aminocyclohexylmethan und 66 g Dodecylbenzyldimethylammoniumchlorid zugegeben. Nach der Einstellung des pH-Wertes auf 5,5 wird auf 90 bis 100°C erhitzt und diese Temperatur für 1 Stunde gehalten. Dann wird der Ansatz mit 1080 ml 33 %iger Natronlauge alkalisch gestellt und einige Stunden bei 90 bis 100°C gehalten. Anschließend wird das Produkt filtriert, gewaschen, getrocknet und gemahlen. Es liefert nichtdurchschlagende, farbstarke und glänzende Drucke auf Naturpapier.
b) Man verfährt wie vorstehend beschrieben, legt jedoch nur 20 g Essigsäure (100 %) statt 240 g vor und gibt 5,6 l der Emulsion von Herstellungsbeispiel 1c) zu. Man erhält nichtdurchschlagende, farbstarke und glänzende Drucke.
2a) Verfährt man wie in Anwendungsbeispiel 1a), setzt jedoch ein Gemisch aus 800 g Oligomeren des ε-Caprolactams und 800 g Talgfettpropylendiamin gemäß Herstellungsbeispiel 4 ein und fügt 254 g Bis-4-aminocyclohexylmethan sowie 200 g Dodecylbenzyldimethylammoniumchlorid hinzu, so erhält man ein Produkt, das nichtdurchschlagende, farbstarke und glänzende Drucke liefert.
b) Verfährt man wie in Anwendungsbeispiel 1a) setzt jedoch ein Gemisch aus 200 g Talgfettpropylendiamin und 1400 g Amid ein, so erhält man farbstarke, glänzende Drucke.
3) Verfährt man wie in Anwendungsbeispiel 2, setzt jedoch ein Umsetzungsprodukt aus Adipinsäure, Hexamethylendiamin und Talgfettpropylendiamin gemäß Herstellungsbeispiel 5 ein, so erhält man ebenfalls Produkte, die farbstarke, glänzende und nichtdurchschlagende Drucke liefern.
4) Verfährt man wie in Anwendungsbeispiel 2, setzt jedoch das Umsetzungsprodukt aus N,N-Bis(3-aminopropyl)-talgfettamin und ε-Caprolactam gemäß Herstellungsbeispiel 3 ein, erhält man ein Pigment, das farbstarke rotstichige und glänzende Drucke liefert, ohne durch dünne Papiere durchzuschlagen.
5) Verfährt man wie in Anwendungsbeispiel 1, setzt jedoch 220 g Bis-4-aminocyclohexylmethan und 150 g Dodecylbenzyldimethylammoniumchlorid zu, so erhält man ein rotstichigeres Pigment als im Anwendungsbeispiel 1.
6) Verfährt man wie in Anwendungsbeispiel 1, setzt jedoch das Umsetzungsprodukt aus Talgfettpropylendiamin und ε-Caprolactam im Verhältnis 1:1,5 gemäß Herstellungsbeispiel 2 ein, so erhält man Pigmente, die sehr farbstarke und glänzende Drucke ergeben, ohne das Durchschlageverhalten zu verschlechtern.
7) Verfährt man wie in Anwendungsbeispiel 1, setzt jedoch 5340 g der 30%igen wäßrigen Emulsion des Umsetzungsproduktes aus Talgfettpropylendiamin und ε-Caprolactam gemäß Herstellungsbeispiel 1b ein, so liefern die erhaltenen Pigmente farbstarke und glänzende Drucke.
8) Verfährt man wie in Anwendungsbeispiel 2, setzt jedoch ein Gemisch aus 1200 g Oligomeren des ε-Caprolactams gemäß Herstellungsbeispiel 4 und 400 g Talgfettpropylendiamin ein, so erhält man Pigmente, die farbstarke und glänzende Drucke liefern.

## Patentansprüche

1. Azopigmentpräparation, bestehend im wesentlichen aus den Komponenten a) bis d) und gegebenenfalls e) weiteren üblichen Zusatzstoffen,
a) einem Amid oder einer Mischung von Amiden, erhältlich aus der Umsetzung
a1) einer Aminocarbonsäure der Formel H₂N-(CR¹ R²)ₘ₄ -COOH oder
a2) eines Lactams der Formel
CO -- NH
(CR¹R²)ₘ₃
oder
a3) einer Dicarbonsäure der Formel HOOC-(CR¹ R²)ₘ₁ -COOH oder einer olefinischen Dicarbonsäure der Formel HOOC-CR¹ =CR²-COOH oder eines der genannten Dicarbonsäure zugrundeliegenden Anhydrids und eines Diamins der Formel H₂N-(CR¹ R²)ₘ₂ -NH₂
in Gegenwart mindestens eines langkettigen primären oder sekundären aliphatischen Amins der Formel (III)
R³R⁴R⁵N (III),
worin
R¹ und R² jeweils unabhängig voneinander Wasserstoff oder C₁-C₄-Alkyl,
m3 eine ganze Zahl von 3 bis 12,
m4 eine ganze Zahl von 1 bis 15,
R³ Wasserstoff, C₄-C₂₅-Alkyl oder C₄-C₂₅-Alkenyl,
R⁴ Wasserstoff, C₄-C₂₅-Alkyl, C₄-C₂₅-Alkenyl oder -[-(CR¹R²)ₘ₅ -NR³]ₚ-R³⁰ bedeuten,
R³⁰ unabhängig von R³ die vorstehend für R³ angegebene Bedeutung hat,
R⁵ Wasserstoff oder -[-(CR¹R²)ₘ₅ -NR³-]ₚ -R³⁰,
p eine ganze Zahl von 1 bis 8,
m1 eine ganze Zahl von 1 bis 10,
m2 eine ganze Zahl von 2 bis 14,
und
m5 eine ganze Zahl von 2 bis 14 bedeuten, mit der Maßgabe, daß R³, R⁴ und R⁵ nicht gleichzeitig Wasserstoff sind,
b) mindestens einem Diamin der Formel (II)
H₂N-A-NH₂ (II),
worin A für einen zweiwertigen aliphatischen Kohlenwasserstoffrest mit 6 bis 30 Kohlenstoffatomen steht;
c) mindestens einem langkettigen primären oder sekundären aliphatischen Amin der vorstehend genannten Formel (III) oder einem Salz dieses Amins sowie
d) mindestens einem Azopigment.

2. Azopigmentpräparation nach Anspruch 1, dadurch gekennzeichnet, daß die nach a1) oder a2) erhältlichen Amide den allgemeinen Formeln (Ia) oder (Ib) entsprechen
Z¹-[-CO-(CR¹R²)ₘ -NH-]_{z} -H (Ia),
wobei
Z¹ Hydroxyl oder -NR³R⁴ und
z eine ganze Zahl von 1 bis 20, vorzugsweise 2 bis 10, insbesondere 2 bis 6, bedeuten,
m im Falle der Umsetzung a1) die Bedeutung von m4 und im Falle der Umsetzung a2) die Bedeutung von m3 hat und
R⁴ Wasserstoff, C₄-C₂₅-Alkyl oder C₄-C₂₅-Alkenyl, vorzugsweise Wasserstoff, C₁₀-C₂₅-Alkyl oder C₁₀-C₂₅-Alkenyl,
R¹ und R² jeweils unabhängig voneinander Wasserstoff oder C₁-C₄-Alkyl, vorzugsweise Wasserstoff,
R³ Wasserstoff, C₄-C₂₅-Alkyl oder C₄-C₂₅-Alkenyl, vorzugsweise Wasserstoff, C₁₀-C₂₅-Alkyl oder C₁₀-C₂₅-Alkenyl,
m3 eine ganze Zahl von 3 bis 12, vorzugsweise von 5 bis 12, und
m4 eine ganze Zahl von 1 bis 15, vorzugsweise von 3 bis 12, bedeuten;
Z²-[-NR³-(CR¹R²)ₘ₅ -]ₚ -NR³-[-CO-(CR¹R²)ₘ -NH-]_{z} -H (Ib)
worin
Z² Wasserstoff, C₄-C₂₅-Alkyl, C₄-C₂₅-Alkenyl oder H₂N-(CR¹R²)ₘ -CO-bedeutet,
m5 eine ganze Zahl von 2 bis 14, vorzugsweise 2 bis 10,
p eine ganze Zahl von 1 bis 8, vorzugsweise 1 bis 4, und
R¹, R², R³, m und z die vorstehend genannten Bedeutungen haben.

3. Azopigmentpräparation nach Anspruch 1, dadurch gekennzeichnet, daß die nach a3) erhältlichen Amide den allgemeinen Formeln (Ic), (Id), oder (Ie) entsprechen,
Z³-[-CO-(CR¹R²)ₘ₁ -CO-NH-(CR¹R²)ₘ₂ -NH-]_{y} -Z⁴ (Ic),
worin unabhängig voneinander R¹, R², m1 und m2 die in Anspruch 1 definierten Bedeutungen haben,
Z³ für Hydroxyl oder -NR³R⁴,
Z⁴ für Wasserstoff, -CO-(CR¹R²)ₘ₁ -COOH oder -CO-(CR¹R²)ₘ₁ -CONR³R⁴,
R³ und R⁴ für Wasserstoff, C₄-C₂₅-Alkyl oder C₄-C₂₅-Alkenyl, und
y für eine ganze Zahl von Null bis 10, vorzugsweise 1 bis 6,
stehen, wobei im Falle, daß y Null ist, Z³ die Bedeutung -NR³R⁴ und Z⁴ die vorstehend genannten Bedeutungen außer Wasserstoff haben; oder der Formel (Id)
Z⁵-[-NR³-(CR¹R²)ₘ₅ -]ₚ -NR³-[-CO-(CR¹R²)ₘ₁ -CO-NH-(CR¹R²)ₘ₂ -NH-]y-Z⁵⁰ (Id)
worin R¹, R², R³` p, y, m1, m2 und m5 die vorstehend definierten Bedeutungen haben,
Z⁵ und Z⁵⁰ unabhängig voneinander jeweils für Wasserstoff oder -CO-(CR¹R²)ₘ₁-COOH stehen, wobei im Falle, daß y Null ist, Z⁵⁰ für -CO-(CR¹R²)ₘ₁-COOH oder -CO-(CR¹R²)ₘ₁-CONR³R⁴ steht,
oder der Formel (Ie)
Z⁶-{-CO-(CR¹R²)ₘ₁-CONH-(CR¹R²)ₘ₂-NH-}ₓ - {CO-(CR¹R²)ₘ₁-CONR³- [(CR¹R²)ₘ₅-NR³]ₚ-}_{y}-Z⁵ (Ie)
worin
Z⁶ Hydroxyl oder H₂N-(CR¹R²)ₘ₂-NH- oder HR³N-[(CR¹R²)ₘ₅ -NR³]ₚ- und
x eine ganze Zahl von Null bis 10, vorzugsweise Null bis 6, bedeuten.

4. Azopigmentpräparation nach mindestens einem der Ansprüche 1 bis 3, dadurch gekennzeichnet, daß der Rest A im Diamin der Formel (II) ein zweiwertiger aliphatischer Kohlenwasserstoffrest mit 6 bis 24 Kohlenstoffatomen ist.

5. Azopigmentpräparation nach mindestens einem der Ansprüche 1 bis 4, dadurch gekennzeichnet, daß im Amin der Formel (III)
R³ Wasserstoff, C₁₀-C₂₅-Alkyl oder C₁₀-C₂₅-Alkenyl,
R⁴ Wasserstoff, C₁₀-C₂₅-Alkyl, C₁₀-C₂₅-Alkenyl oder [-(CH₂)ₘ₅-NR³-]ₚ-R³⁰, wobei
R³⁰ unabhängig von R³ die vorstehend für R³ angegebenen Bedeutungen hat,
m5 eine ganze Zahl von 2 bis 14,
p die Zahlen 1 bis 8 und
R⁵ Wasserstoff bedeuten.

6. Azopigmentpräparation nach mindestens einem der Ansprüche 1, 2, 4 und 5, dadurch gekennzeichnet, daß die gemäß Umsetzung a1) oder a2) eingesetzten Mengenverhältnisse der Aminocarbonsäure oder des Lactams zum Amin der Formel (III) zwischen 1:2 und 10:1, vorzugsweise 1:1 und 2:1, liegen.

7. Azopigmentpräparation nach mindestens einem der Ansprüche 1 und 3 bis 5, dadurch gekennzeichnet, daß die gemäß Umsetzung a3) eingesetzten Mengenverhältnisse der Dicarbonsäure, des Diamins und des Amins der Formel (III) 1:1:1 bis 1:1,3:6, vorzugsweise 1:1:4, betragen.

8. Azopigmentpräparation nach mindestens einem der Ansprüche 1 bis 7, dadurch gekennzeichnet, daß das Azopigment ein Acetoacetylarylamid-Azopigment ist.

9. Azopigmentpräparation nach mindestens einem der Ansprüche 1 bis 8, dadurch gekennzeichnet, daß der Anteil der Amide gemäß Umsetzung a) in der Azopigmentpräparation zwischen 5 und 50 Gew.-%, vorzugsweise 35 und 45 Gew.-%, bezogen auf das Gewicht des Azopigments, beträgt.

10. Azopigmentpräparation nach mindestens einem der Ansprüche 1 bis 9, dadurch gekennzeichnet, daß der Anteil des Diamins der Formel (II) in der Azopigmentpräparation zwischen 2 und 20 Gew.-%, vorzugsweise 4 und 12 Gew.-%, bezogen auf das Gewicht des Azopigments, beträgt.

11. Azopigmentpräparation nach mindestens einem der Ansprüche 1 bis 10, dadurch gekennzeichnet, daß der Anteil des Amins der Formel (III) in der Azopigmentpräparation zwischen 5 und 40 Gew.-%, vorzugsweise zwischen 10 und 30 Gew.-%, bezogen auf das Gewicht des Azopigments, beträgt.

12. Verfahren zur Herstellung einer Azopigmentpräparation nach mindestens einem der Ansprüche 1 bis 11, dadurch gekennzeichnet, daß die gemäß der Umsetzung nach a1), a2) oder a3) erhältlichen Amide, mindestens ein Diamin der Formel (II) und mindestens ein Amin der Formel (III) vor, während oder nach der Azokupplung, vorzugsweise vor der Azokupplung, zugesetzt werden.

13. Verwendung einer Azopigmentpräparation nach mindestens einem der Ansprüche 1 bis 11 zur Herstellung von Illustrationstiefdruckfarben.
